# FASCICULE DE BREVET EUROPEEN

(11) **EP 2 321 827 B1**
(45) Date de publication et mention de la délivrance du brevet: **04.01.2012**
(21) Numéro de dépôt: 09802553.9
(22) Date de dépôt: 23.07.2009
(51) Int. Cl.: G21C 19/34, G21F 9/30

(54) **PROCEDE D'ELIMINATION DU POLYMERE ENROBANT UNE PASTILLE DE COMBUSTIBLE NUCLEAIRE.**
VERFAHREN ZUR ENTFERNUNG DES VERKAPSELUNGSPOLYMERS EINER KERNBRENNSTOFFTABLETTE
METHOD OF REMOVING THE POLYMER ENCAPSULATING A NUCLEAR FUEL PELLET

(30) Priorité: 28.07.2008 FR 0804273
(43) Date de publication de la demande: 18.05.2011
(73) Titulaire: Commissariat à l'Énergie Atomique et aux Énergies Alternatives, 75015 Paris (FR)
(72) Inventeur: HANUS, Eric, F-04100 Manosque (FR); FIQUET, Olivier, F-13770 Venelles (FR); TARISIEN, Nicolas, Les Micocouliers, 13090 Aix en Provence (FR)
(74) Mandataire: Dennemeyer, John James
(86) Numéro de dépôt international: PCT/FR2009/000913
(87) Numéro de publication internationale: WO 2010/012886

(56) Documents cités:
- WO-A-01/90633
- GB-A- 2 328 784
- SINGH A K ET AL: "Processing of uranium oxide and silicon carbide based fuel using polymer infiltration and pyrolysis" JOURNAL OF NUCLEAR MATERIALS, ELSEVIER BV, NL, vol. 378, no. 3, 1 septembre 2008 (2008-09-01), pages 238-243, XP024101006 ISSN: 0022-3115 [extrait le 2008-08-15]

## Description

### DOMAINE TECHNIQUE

La présente invention se situe dans le domaine du traitement des combustibles nucléaires.

Elle concerne en particulier le traitement, avant ou après irradiation, des pastilles de combustible nucléaire que l'on enrobe par un polymère en vue de les caractériser lors d'études métallographiques.

### ETAT DE LA TECHNIQUE

La microstructure d'une pastille de combustible nucléaire est déterminée au cours d'études métallographiques à l'aide de techniques telles que la microscopie optique ou la microscopie électronique.

En vue de ces études, il est nécessaire de préparer la pastille en l'enrobant avec un polymère tel qu'un polymère époxyde et/ou phénolique et/ou un polyester.

Une fois les études réalisées, le polymère, s'il reste en place sur la pastille, est exposé aux rayonnements ionisants émis par le combustible nucléaire. Il se dégrade alors par une réaction de radiolyse dont les produits sont notamment des gaz explosifs tels que l'hydrogène, l'oxygène et le méthane.

Dans une optique de transport, de stockage et d'entreposage de la pastille, il est dès lors nécessaire d'éliminer le polymère recouvrant tout ou partie de la pastille de combustible nucléaire afin de supprimer tout risque d'explosion, de réduire le volume du déchet que peut constituer la pastille enrobée et d'éviter l'effet modérateur neutronique du polymère en cas de réutilisation de la pastille en tant que combustible nucléaire.

En dehors du domaine nucléaire, différentes méthodes existent pour éliminer un polymère. Ainsi, en plasturgie, le polymère tapissant la matrice ayant servi à mouler une pièce par injection est éliminé à l'aide d'un traitement thermique dans lequel on pyrolyse le polymère en présence d'un gaz oxydant.

Cette pyrolyse génère des sous-produits volatils qu'il est facile d'éliminer par postcombustion dans un four annexe. Mais elle génère également des résidus solides dont la destruction nécessite une étape supplémentaire d'oxydation par l'air.

Un traitement par pyrolyse, lorsqu'il est appliqué à une pastille de combustible nucléaire comprenant du dioxyde d'uranium UO₂, doit permettre l'élimination la plus complète possible du polymère mais également des résidus solides qui sont issus de la pyrolyse et qui restent en contact avec la pastille, la radiolyse de ces résidus pouvant également générer des gaz explosifs.

Toutefois, un traitement combinant une étape de pyrolyse et d'oxydation a pour inconvénient d'oxyder l'UO₂ en U₃O₈. Cette transformation s'accompagne d'un fort accroissement volumique de la maille cristalline (d'environ 36 %) que la pastille frittée ne peut accommoder. Il s'ensuit une importante fissuration et un gonflement de la pastille qui aboutit à sa fragmentation et à la formation de poudre d'U₃O₈.

Or, la forme pulvérulente de l'U₃O₈ a pour inconvénients de pouvoir être disséminée par voie aérienne et de provoquer la libération totale des gaz de fission initialement contenus dans la pastille de combustible nucléaire (tel que le Krypton 85), ces deux phénomènes augmentant les risques de contamination radiologique.

### EXPOSE DE L'INVENTION

Un des buts de l'invention est donc de réaliser un procédé permettant d'éliminer le polymère (ou tout résidu qui en est issu) enrobant une pastille de combustible nucléaire comprenant du dioxyde d'uranium UO₂, un tel procédé permettant d'éviter ou de limiter fortement la formation de poudre d'U₃O₈ qui est source de contamination radiologique.

L'objet de l'invention concerne ainsi un procédé pour éliminer le polymère époxyde et/ou phénolique enrobant une pastille de combustible nucléaire comprenant du dioxyde d'uranium UO_{2.}

Ce procédé comprend les étapes successives suivantes
a) on pyrolyse le polymère sous une atmosphère réductrice ;
b) on réalise l'oxydation sélective des résidus carbonés obtenus à l'issue de l'étape (a) de pyrolyse, l'oxydation étant effectuée à une température supérieure à 1000 °C (typiquement comprise entre 1000 °C et 1700 °C) sous une atmosphère comprenant du dioxyde de carbone CO₂.

Dans l'ensemble de la description, on entend par « résidus » tous produits résultant de la réaction de pyrolyse du polymère époxyde et/ou phénolique. Il s'agit en général de résidus solides qui sont dits « carbonés » car contenant au moins 80 % en poids de carbone qui peut être lié à des atomes d'oxygène ou d'hydrogène.

Le terme « pyrolyse » désigne quant à lui un traitement thermique effectué en absence d'oxygène.

De préférence, l'atmosphère réductrice comprend un gaz inerte (à savoir inerte chimiquement vis-à-vis des espèces chimiques présentes), tel que l'argon, et de l'hydrogène. Ce dernier représente préférentiellement entre 0,5 % et 10 % du volume de l'atmosphère réductrice, plus préférentiellement environ 5 %.

Avantageusement, la pyrolyse est effectuée à une température supérieure à 600 °C (typiquement comprise entre 600 °C et 1700 °C) afin de limiter la quantité de résidus et d'hydrogène résiduels.

L'étape (b) d'oxydation est sélective en ce sens qu'elle permet d'oxyder les résidus carbonés obtenus à l'issue de l'étape (a) de pyrolyse, tout en évitant ou limitant fortement l'oxydation d'UO₂ en U₃O₈. Cette étape peut éventuellement être réalisée sous une atmosphère qui comprend en outre du monoxyde de carbone CO, ce gaz ayant pour avantage de prévenir la formation d'U₃O₈.

Généralement, la pastille de combustible nucléaire traitée par le procédé de l'invention est majoritairement constituée de dioxyde d'uranium UO₂. Toutefois, lorsque l'on réalise des études métallographiques sur une pastille de combustible nucléaire de type MOX (« Mixed OXide fuel »), le procédé de l'invention peut également être mis en oeuvre pour éliminer le polymère qui enrobe une pastille de combustible nucléaire qui comprend en outre du dioxyde de plutonium PuO₂.

D'autres objets, caractéristiques et avantages de l'invention apparaîtront mieux à la lecture de la description qui suit, donnée à titre illustratif et non limitatif, en référence aux Figures 1 à 2 annexées.

### BREVE DESCRIPTION DES FIGURES

La Figure 1 est un graphique qui représente la variation de masse en fonction du temps d'une pastille d'UO₂ enrobée de polymère époxyde lorsque la pastille est soumise à une pyrolyse sous argon U suivie d'une oxydation sous air.
La Figure 2 est un graphique qui représente, pour différentes températures, la variation de masse en fonction du temps de la même pastille pyrolysée sous argon U lorsqu'elle est soumise à une oxydation sous CO₂.

### DESCRIPTION DETAILLEE DE MODES DE REALISATION PARTICULIERS

La description détaillée qui suit porte sur l'élimination d'un polymère époxyde enrobant une pastille de dioxyde d'uranium UO₂.

Des expériences parallèles (non reproduites ici) montrent des résultats similaires lorsque le polymère est un polymère phénolique.

### 1 - Fabrication d'échantillons de pastille enrobée.

Du dioxyde d'uranium UO₂ obtenu par « voie humide » est pressé, puis fritté sous atmosphère réductrice afin d'obtenir une pastille présentant une densité de 10,96 g/cm³_{.}

La pastille est ensuite placée dans un moule, puis enrobée par coulage d'un polymère époxyde (polymère DGEBA (diglycidyléther du bisphénol A) commercialisé par la société STRUERS sous le nom d'EPOFIX.

Après durcissement du polymère, la pastille enrobée est découpée à l'aide d'une scie à fil et une de ses faces est finement polie (qualité miroir) pour permettre une éventuelle observation microscopique.

La pastille présente un diamètre de 8 mm et une épaisseur de 3 mm. Elle est constituée de 1,05g d'UO₂ et 0,23 g de polymère époxyde.

Des échantillons de la pastille enrobée sont introduits dans une thermo-balance (modèle STA 409 C de la société NETZSCH) qui permet de suivre en continu l'évolution de la masse d'un échantillon soumis à une température prédéfinie sous atmosphère contrôlée.

### 2 - Traitement d'échantillons de pastille enrobée.

Divers procédés sont mis en oeuvre pour éliminer le polymère époxyde enrobant les échantillons fabriqués précédemment.

### 2.1 - Mise en oeuvre du procédé de l'invention.

Cet exemple de réalisation du procédé de l'invention permet, par comparaison, de mettre l'accent sur les avantages procurés par l'étape de pyrolyse de l'invention vis-à-vis d'une pyrolyse en conditions oxydantes.

A titre de référence, un premier échantillon est pyrolysé à 600 °C pendant 2 heures sous une atmosphère légèrement oxydante constituée d'argon de qualité industrielle (argon U dont les teneurs en impuretés, exprimées en ppm volumique, sont reportées dans le tableau 1).

**Tableau 1**

| N2 O₂ | CO₂ | H₂O | H₂ | CnHm |
|---|---|---|---|---|
| <20ppm <5ppm | <5ppm | < 5ppm | < 10ppm | < 5ppm |

Cet échantillon subit ensuite une oxydation à 1000 °C pendant 1 heure sous une atmosphère composée de dioxyde de carbone.

Un second échantillon est traité selon le procédé de l'invention : une pyrolyse à 600 °C pendant 2 heures sous une atmosphère réductrice composée d'argon comprenant 5 % en volume d'hydrogène, puis une oxydation à 1000 °C pendant 1 heure sous une atmosphère composée de dioxyde de carbone (conditions d'oxydation identiques au premier échantillon).

A l'issue de ces traitements, les deux échantillons ne contiennent plus de résidus et restent intègres mécaniquement.

Toutefois, seul le deuxième échantillon ayant subi une pyrolyse sous une atmosphère réductrice conforme au procédé de l'invention ne présente pas de reprise de masse significative et révélatrice de l'oxydation progressive de l'UO₂ en U₃O₈. Cette reprise de masse (exprimée en % de masse par rapport à la masse de l'échantillon pyrolysé) est en effet négligeable puisque elle est de 0,1 % (contre 0,5 % pour le premier échantillon pyrolysé sous argon U).

### 2.2 - Etape d'oxydation.

Afin de montrer les avantages procurés par la seule étape d'oxydation de l'invention, deux traitements distincts sont réalisés. Ces traitements différent toutefois du procédé de l'invention en ce que l'étape de pyrolyse n'est pas effectuée sous atmosphère réductrice.

Deux échantillons sont soumis à une même pyrolyse sous conditions légèrement oxydantes (600 °C pendant 2 heures sous argon U), puis à une oxydation réalisée dans des conditions distinctes pour chaque échantillon, à savoir :
- le premier échantillon est oxydé à 600 °C pendant 45 minutes sous une atmosphère composée d'air reconstitué (20 % d'oxygène et 80 % d'azote en volume)
- le deuxième échantillon est oxydé, conformément au procédé de l'invention à 1100 °C ou 1200 °C ou 1350 °C pendant 1 heure sous une atmosphère composée de dioxyde de carbone.

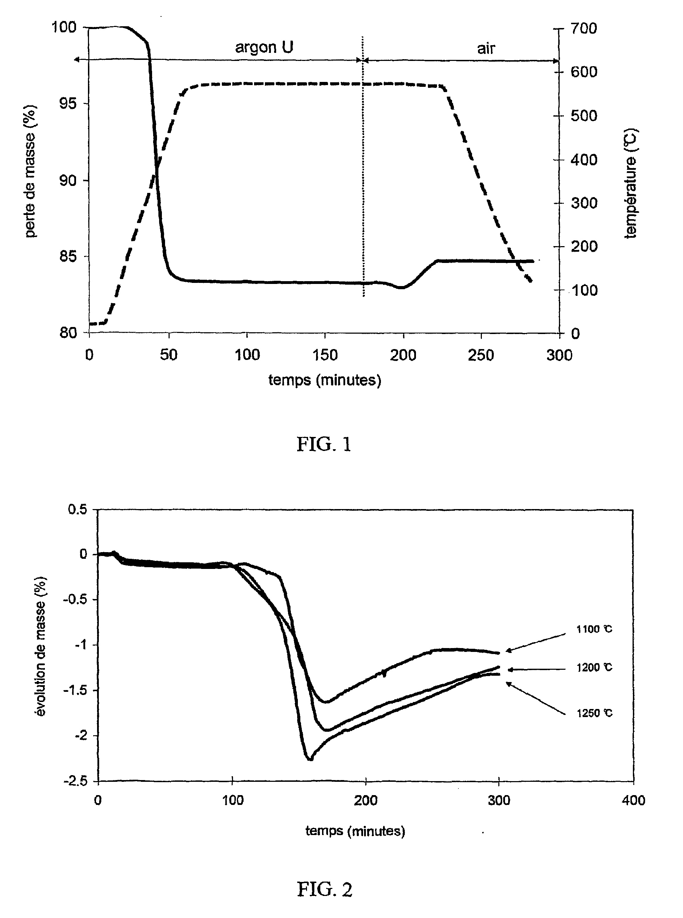

La Figure 1 représente la variation de masse du premier échantillon en fonction du temps.

La Figure 2 représente cette même variation pour le deuxième échantillon, ainsi que la température appliquée en fonction du temps (traits pointillés). Elle n'illustre toutefois pas l'étape de pyrolyse réalisée sous argon U car cette étape est identique à celle présentée dans la Figure 1. La variation de masse qu'elle indique est donc celle de l'échantillon après pyrolyse sous argon U.

L'analyse des Figures 1 et 2 permet de faire ressortir les différences suivantes entre une oxydation sous air et une oxydation sous CO₂.

Comme cela apparaît sur la Figure 1, la pyrolyse sous argon U élimine une part importante du polymère (perte de masse de la pastille enrobée de l'ordre de 17 %).

Puis, lors de l'oxydation sous air des résidus, la perte de masse se poursuit de façon très modérée jusqu'à un temps de traitement de 200 minutes. Elle est rapidement compensée par une reprise de masse évaluée à 3,2 % par rapport à la masse de l'échantillon avant pyrolyse. Ceci est dû à l'oxydation progressive de l'UO₂ en U₃O₈, ce dernier étant un oxyde de poids moléculaire plus élevé. Cette observation est corroborée par l'aspect de l'échantillon qui est désormais totalement sous forme de poudre.

Comme indiqué précédemment, il n'est donc pas possible d'oxyder sous air les résidus de pyrolyse sans transformer simultanément la pastille frittée d'UO₂ en poudre d'U₃O₈.

Lorsque l'étape d'oxydation est réalisée sous CO₂ (cf. Figure 2), il apparaît également pour toutes les températures considérées une perte de masse liée à l'oxydation des résidus (à partir de 100 minutes). Des expériences réalisées à d'autres températures (non reproduites ici) montrent que cette oxydation ne devient complète que pour une température supérieure à 1000 °C, une telle température ayant également pour avantage de favoriser la stabilité de l'UO₂ par rapport à l'U₃O₈.

Cette perte de masse est suivie par une reprise de masse due à l'oxydation de la pastille d'UO₂ qui conduit à la formation de poudre d'U₃O₈ (à partir de 150 minutes).

Toutefois, les fractions massiques de poudre d'U₃O₈ sont alors bien plus faibles que précédemment puisque, pour les températures de 1100 °C, 1200 °C et 1350 °C, elles sont respectivement de 1,7 %, 2,1% et 1,4 % par rapport à la masse de l'échantillon après pyrolyse. De telles valeurs sont insuffisantes pour remettre en cause l'intégrité mécanique de la pastille frittée, alors que le traitement d'oxydation sous air conduit quant à lui à une pulvérisation totale de l'échantillon.

En comparant ces deux traitements, il apparaît donc que l'étape d'oxydation selon l'invention, à savoir une oxydation sous CO₂ à une température supérieure à 1000 °C, permet d'oxyder complètement les résidus tout en limitant fortement la formation de poudre d'U₃O₈.

Il ressort de la description qui précède que le procédé de l'invention permet d'éliminer le polymère époxyde et/ou phénolique enrobant une pastille de combustible nucléaire comprenant du dioxyde d'uranium UO₂ tout en limitant voire en évitant le risque de contamination radiologique par formation de poudre d'U₃O₈.

## Revendications

1. Procédé pour éliminer le polymère époxyde et/ou phénolique enrobant une pastille de combustible nucléaire comprenant du dioxyde d'uranium UO₂,
le procédé comprenant les étapes successives suivantes :
a) on pyrolyse ledit polymère sous une atmosphère réductrice ;
b) on réalise l'oxydation sélective des résidus carbonés obtenus à l'issue de l'étape (a) de pyrolyse, ladite oxydation étant effectuée à une température supérieure à 1000 °C sous une atmosphère comprenant du dioxyde de carbone CO₂.

2. Procédé selon la revendication 1, dans lequel ladite atmosphère réductrice comprend un gaz inerte, tel que l'argon, et de l'hydrogène.

3. Procédé selon la revendication 2, dans lequel l'hydrogène représente entre 0,5 % et 10 % du volume de ladite atmosphère réductrice.

4. Procédé selon l'une quelconque des revendications précédentes, dans lequel ladite pyrolyse est effectuée à une température supérieure à 600°C.

5. Procédé selon l'une quelconque des revendications précédentes, dans lequel ladite oxydation est réalisée sous une atmosphère qui comprend en outre du monoxyde de carbone CO.

6. Procédé selon l'une quelconque des revendications précédentes, dans lequel ladite pastille comprend en outre du dioxyde de plutonium PuO_{2.}

## Claims

1. A method for removing the epoxy and/or phenolic polymer encapsulating a nuclear fuel pellet comprising uranium dioxide UO₂, the method comprising the following steps:
a) pyrolyzing said polymer in a reducing atmosphere;
b) performing the selective oxidation of the carbon-based residues obtained after the pyrolysis step (a) said oxidation being carried out at a temperature above 1000°C in an atmosphere comprising carbon dioxide CO₂.

2. The method according to claim 1 wherein said reducing atmosphere comprises an inert gas, such as argon, and hydrogen.

3. The method according to claim 2, wherein the hydrogen represents a proportion lying between 0.5% and 10% of the volume of said reducing atmosphere.

4. The method according to any one of the preceding claims, wherein said pyrolysis is performed at a temperature above 600°C.

5. The method according to any one of the preceding claims, wherein said oxidation is performed in an atmosphere which further comprises carbon monoxide CO.

6. The method according to any one of the preceding claims, wherein said pellet further comprises plutonium dioxide PuO₂.

## Patentansprüche

1. Verfahren zur Entfernung Exoxyd- und/oder Phenolpolymers, das eine Brennstofftablette umschließt, die Urandioxid UO₂ enthält,
wobei das Verfahren die folgenden aufeinanderfolgenden Schritte umfasst:
a) Pyrolyse des Polymers in einer reduzierenden Atmosphäre,
b) Durchführung der selektiven Oxidation der kohlenstoffhaltigen Rückstände nach der Pyrolyse von Schritt (a), wobei die Oxidation bei einer Temperatur über 1000 °C in einer Atmosphäre durchgeführt wird, die Kohlendioxid CO₂ enthält.

2. Verfahren nach Anspruch 1, wobei die reduzierende Atmosphäre ein Schutzgas wie zum Beispiel das Argon und Wasserstoff umfasst.

3. Verfahren nach Anspruch 2, wobei der Wasserstoff zwischen 0,5 % und 10 % des Volumens der reduzierenden Atmosphäre darstellt.

4. Verfahren nach einem der vorangehenden Ansprüche, wobei die Pyrolyse bei einer Temperatur über 600 °C durchgeführt wird.

5. Verfahren nach einem der vorangehenden Ansprüche, wobei die Oxidation in einer Atmosphäre durchgeführt wird, die weiterhin Kohlenmonoxid CO umfasst.

6. Verfahren nach einem der vorangehenden Ansprüche, wobei die Tablette weiterhin Plutoniumdioxid PuO₂ umfasst.
